# EUROPEAN PATENT SPECIFICATION

(11) **EP 4 054 744 B1**
(45) Date of publication and mention of the grant of the patent: **25.11.2026**
(21) Application number: 20885864.7
(22) Date of filing: 21.10.2020
(51) Int. Cl.: B01D 63/14, B01D 65/00, B01D 36/00, B01D 29/90

(54) **FILTER WITH IMPROVED FLUID FLOW**
FILTER MIT OPTIMIERTER FLUIDSTRÖMUNG
FILTRE À ÉCOULEMENT DE FLUIDE AMÉLIORÉ

(30) Priority: 06.11.2019 US 201962931290 P
(43) Date of publication of application: 14.09.2022
(60) Divisional application: 26209810.6
(73) Proprietor: Entegris, Inc., Billerica, MA 01821 (US)
(72) Inventor: GREGERSON, Barry L., Deephaven, Minnesota 55331 (US); BARCK, Christopher P., Westford, Massachusetts 01886 (US)
(74) Representative: Greaves Brewster LLP
(86) International application number: PCT/US2020/056636
(87) International publication number: WO 2021/091691

(56) References cited:
- WO-A2-01/89669
- JP-A- 2015 029 946
- US-A- 3 637 078
- US-A- 4 303 423
- US-A- 5 628 909
- US-A1- 2007 289 917
- US-A1- 2015 041 380
- US-A1- 2019 217 253
- US-B1- 6 294 090
- US-B1- 6 709 598
- US-B2- 7 820 046

## Description

### Technical Field

The present disclosure generally relates to a fluid-processing filter assembly.

### Background

Fluids used in manufacturing, for example in the semiconductor manufacturing industry, often flow through multiple filters to remove contaminants from the fluid before the fluid is dispensed. The filter used at the last filtration point prior to dispensing a fluid into a system is generally called a point of use (POU) or point of dispense (POD) filter. Filters typically have an integral filter cartridge including a porous membrane surrounded by a cage. The filter cartridge is disposed in a housing.

There are typically tight space constraints in the manufacturing equipment for the filters. There is a need for a filter with a compact design that also provides adequate flow rate for filtering fluids. Allows to decrease size of filter while increases the amount of membrane to achieve a smaller filter with increased flow rate. Can include more membrane in a smaller filter to achieve increased flow rate.
US5628909A relates to membrane filters with corkscrew vortex generating means.
US7820046B2 relates to a filter assembly for sampling.
WO01/89669A2 relates to a secondary flow enhanced filtration system.
US3637078A relates to a directional flow fluid filter.
JP2015029946A relates to a filter unit.
US4303423A relates to an engine air cleaner.

### Summary

The present invention relates to a filter and a method of filtering a fluid through a filter according to the claims.

Disclosed herein is a filter comprising, consisting essentially of, or consisting of: a tubular housing having first and second end surfaces and interior and exterior surfaces, a membrane disposed within the tubular housing, a first end cap sealed to the first end surface of the tubular housing and the first end surface of the membrane; a second end cap sealed to the second end surface of the tubular housing and the second end surface of the membrane; and a fluid channel formed in the interior surface of the tubular housing in a helical pattern. The helical pattern has a helical pitch in an axial direction of the tubular housing of less than or equal to about 60 mm. Filters with these features allows for a decrease the size of a given filter while also increasing the amount of membrane disposed in the filter while also achieving an increased flow rate.

In some embodiments, the filter further comprises, consists essentially of, or consists of a core disposed within the tubular housing wherein the membrane is positioned between the core and the tubular housing.

In an embodiment, a filter includes a housing having interior and exterior surfaces, a membrane disposed within the housing, and a fluid channel formed in the interior surface of the housing. The fluid channel has a helical pattern with a helical pitch in an axial direction of the housing of less than or equal to about 60 mm, the fluid channel formed between raised portions of the interior surface of the housing.

In an embodiment, the helical pattern has a helical angle of less than or equal to about 45 degrees.

In an embodiment, the filter further includes a core disposed within the housing wherein the membrane is positioned between the core and the housing.

In an embodiment, the filter further includes a first end cap, wherein the first end cap includes a first opening acting as an inlet for fluid and a second opening acting as an outlet for the fluid.

In an embodiment, first end cap further includes a third opening acting as a vent.

In an embodiment, the inlet for the fluid directs the fluid into the fluid channel. In an embodiment, the filter includes a tube configured to receive the fluid from the inlet and a port configured to provide fluid to the fluid channel, and the tube and the port are configured such that the fluid is introduced into the fluid channel at a bottom of the fluid channel. In an embodiment, the exterior surface of the housing has a generally cylindrical shape, and the tube is disposed in a projection extending outwards from the generally cylindrical outer surface of the housing.

In an embodiment, the outlet is configured to allow the fluid within the fluid channel to leave the filter.

In an embodiment, each of the inlet and the outlet have a different height.

In an embodiment, the membrane is in direct contact with the raised portions of the interior surface. In an embodiment, there is no cage located between the membrane and the raised portions of the interior surface.

In an embodiment, a filter housing includes an interior surface, an exterior surface, and a fluid channel formed in the interior surface of the filter housing. The fluid channel has a helical pattern with a helical pitch in an axial direction of the housing of less than or equal to about 60 mm, the fluid channel formed between raised portions of the interior surface of the housing.

In an embodiment, the helical pattern has a helical angle of less than or equal to about 45 degrees.

In an embodiment, the housing includes a first end configured to be connected to a first end cap and a second end configured to be connected to a second end cap, wherein the first end cap includes a first opening acting as an inlet for fluid and a second opening acting as an outlet for the fluid.

In an embodiment, a method of filtering a fluid includes introducing the fluid into a filter through an inlet and directing the fluid through a fluid channel formed in a housing of the filter. The fluid channel has a helical pattern with a helical pitch in an axial direction of the housing of less than or equal to about 60 mm. The fluid channel is formed between raised portions of an interior surface of the housing. The method also includes passing the fluid through a membrane, wherein the membrane is in direct contact with the raised portions.

In an embodiment, directing the fluid through the fluid channel is performed prior to passing the fluid through the membrane.

### Brief Description of the Drawings

The disclosure may be more completely understood in consideration of the following description of various illustrative embodiments in connection with the accompanying drawings
FIG. 1 is an exploded view of an exemplary filter;
FIG. 2 is an isometric view of an exemplary filter;
FIG. 3 is a cross-sectional view of an exemplary filter; and
FIG. 4 is a cross-sectional view of an exemplary filter housing.
FIG. 5 is a cross-sectional view of an exemplary filter according to another embodiment.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the scope of the disclosure.

Like reference numbers refer to like parts throughout.

### Detailed Description

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

The term "about" generally refers to a range of numbers that is considered equivalent to the recited value (e.g., having the same function or result). In many instances, the term "about" may include numbers that are rounded to the nearest significant figure.

Numerical ranges expressed using endpoints include all numbers subsumed within that range (e.g. 1 to 5 includes 1, 1.5, 2, 2.75, 3, 3.80, 4 and 5).

The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.

The desire to reduce the size of filters must be balanced with maintaining an adequate flow rate through the filter. Disclosed herein are filters that do not include an integral filter cartridge by eliminating the use of a cage. Instead the membrane is disposed in a housing wherein a fluid channel is formed in the interior surface of the housing in a helical pattern. The area of the interior surface of the housing located between turns of the helix contact the membrane and provide support to the membrane. The elimination of the cage allows for additional membrane to be placed in the filter and the helical fluid channel provides for adequate support of the membrane and flow of the fluid to be filtered through the filter. In some embodiments, the helical pitch of the helical fluid channel in an axial direction of the housing is less than or equal to about 60 mm to ensure adequate support for the membrane as well as maintaining adequate flow of fluid through the filter.

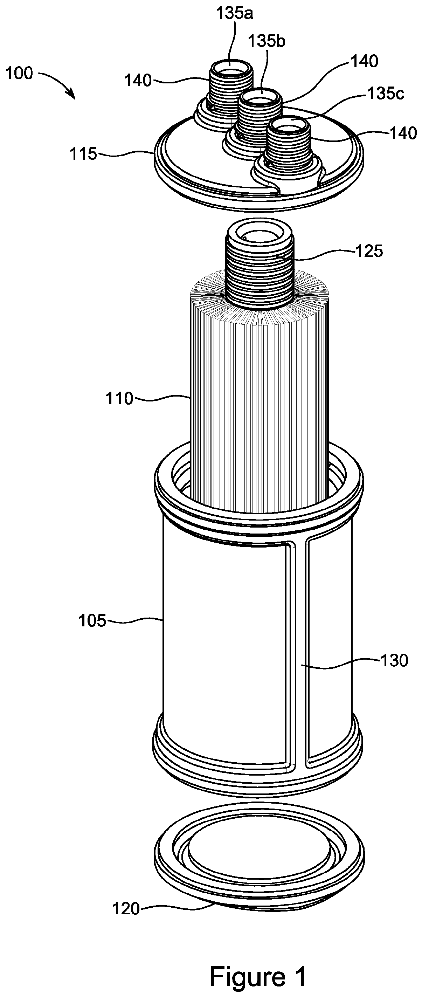

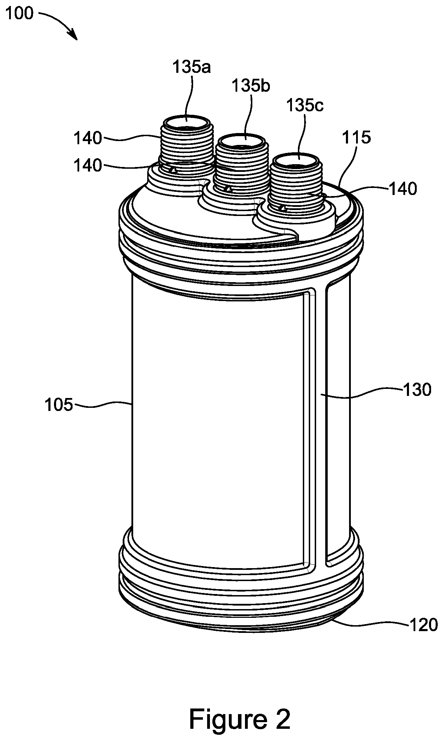

Figs. 1 and 2 depict exploded and isometric views, respectively, for an exemplary filter 100. The filter 100 includes a housing 105, a membrane 110 disposed in the housing, a first end cap 115 and a second end cap 120. As shown, in Fig. 1, in some embodiments, the filter may also include a core 125 about which the membrane is disposed. In other embodiments, the core 125 shown in Figure 1 can be omitted.

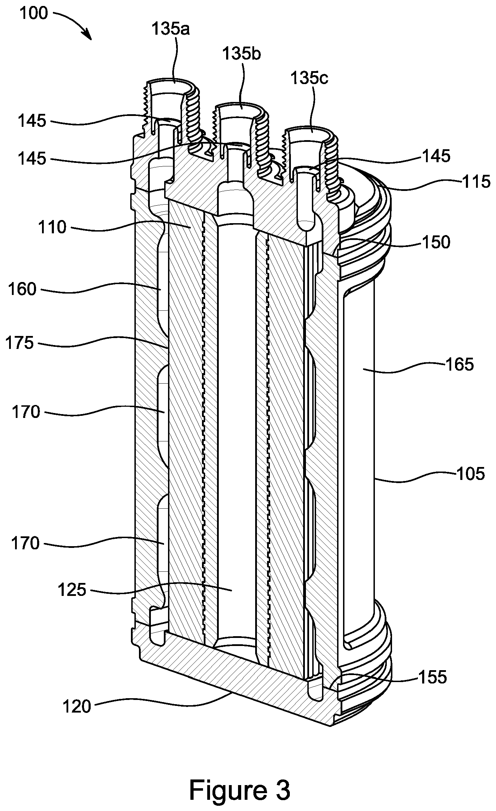

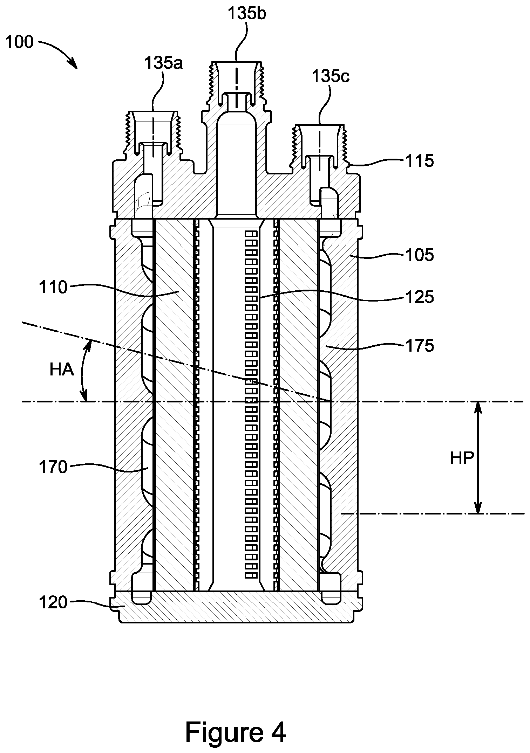

The housing 105 can form, at least in part, a housing defining an internal space. The first end cap 115 and/or second end cap 120 can be used in addition to housing 105 to define the internal space. The internal space can accommodate the membrane 110 and optionally the core 125, along with a fluid being filtered using said membrane 110. The housing 105 can include a rib 130. In an embodiment, the rib 130 extends between an end where the first end cap 115 is attached to the housing 105 and an opposite end of the housing where the second end cap 120 is attached to the housing 105. The rib 130 can be used in molding of the housing 105, particularly when molding structure of interior surfaces of the housing 105, detailed below and shown in Figs. 3 and 4. In embodiments, the rib 130 can further provide reinforcement or allow engagement for manual or automated handling of the filter 100.

In an embodiment, the first end cap 115 includes one or more connectors such as connectors 135a,b,c shown in Figs. 1 and 2. In an embodiment, each of the connectors 135a,b,c includes threading 140 surrounding an aperture 145. In embodiments, only two such connectors 135a,b can be included. The threading 140 can allow connection of a fluid line to each respective connector 135a,b,c. In embodiments, threading 140 can be replaced with any other suitable mechanical connector for forming a sealed connection between fluid lines and the respective connectors 135a,b,c. The apertures 145 can allow fluid to pass into or out of housing 105, for example to allow fluid that is being filtered to enter or exit the housing 105 or to allow venting of air or any other fluid from the housing 105. In an embodiment, the connectors 135a,b,c can include inlet 135a, outlet 135b, and vent 135c. The inlet 135a can allow the fluid to be filtered to enter housing 105. Outlet 135b can allow the fluid that has been filtered using membrane 110 to exit the housing 105. The outlet 135b can be positioned such that membrane 110 is located within the fluid path from inlet 135a to outlet 135b through the internal space defined by housing 105 and first and second end caps 115, 120. The vent 135c can allow other fluids to leave housing 105, such as, as a non-limiting example, allowing air to exit the housing 105 when the fluid to be filtered is introduced into a previously unused filter 100. Fluids, including both those filtered by the filter 100 and also other fluids such as the fluid vented at 135c can be matter in either the gaseous or liquid phase.

Fig. 3 depict sectional views of filter 100, and filter housing 105, respectively. Fig. 4 also depicts a sectional view of filter 100 and filter housing 105, except that Fig. 4 show connectors 135a,b,c are not all the same height, such connectors according to embodiments can be provided in different positions or arrangements, or configurations so long as a fluid flow path through housing 105 from inlet 135a to outlet 135b requires the fluid to pass through membrane 110. Fig. 3 shows that connectors 135 a,b,c, are all the same height. In the exemplary embodiment shown in Fig. 4, the connectors 135 a,b,c can each positioned and/or configured (i.e. by varying the height of the corresponding threading) to be provided at different heights. In embodiments, the position, arrangement, and/or configuration of connectors 135 a,b,c can be selected to correspond to the positions of fluid line connections on the device that filter 100 is to be used with.

In the exemplary embodiments of Figs. 3 and 4, the housing 105 is tubular in shape and has a first end surface 150, a second end surface 155, an interior surface 160, and an exterior surface 165.

The housing 105 may be made of any suitable moldable material typically used for filter housings, including, but not limited to, polypropylene, polyethylene, and perfluoroalkoxy alkanes (PFAs). The interior surface 160 of the housing 105 includes a fluid channel 170 having a helical pattern such that the interior surface 160 has raised areas 175 located between turns of the helical pattern.

In some embodiments, the exterior surface 165 of the housing 105 has ribs 130 extending from the exterior surface 165. The ribs 130 can be utilized in the process of molding the housing. In an embodiment, center mold piece defining the helical pattern of the fluid channel can be unscrewed from the housing at the end of molding. In order to facilitate the remove of the center mold piece, the ribs can be used to lock the housing 105 in place in the mold and prevent the housing 105 from turning. The ribs 130 are shown as being straight lines in the Figures, however this is merely exemplary; in embodiments, ribs 130 can be any suitable shape. The housing 105 is distinct from a cage typically used in filters in that a cage has openings in the exterior surface to allow fluid into/out of the membrane. The exterior surface 165 of the housing can be free of openings.

The membrane 110 can be a porous membrane and can have a pleated configuration. In some embodiments a pleated membrane used as membrane 110 can be wrapped in a tubular configuration. Suitable materials that can be used for the membrane include, as non-limiting examples, polytetrafluoroethylene (PTFE), polyethylene (including ultra high molecular weight polyethylene (UPE)), and polysulfone. The membrane has a first edge, a second edge, and a first (or interior) and a second (or exterior) surface extending between the first and second edges. In embodiments, the membrane 110 can directly contact the interior surface 160. In an embodiment, the membrane 110 directly contacts the interior surface 160 only at raised areas 175. In an embodiment, the interior surface 160 is spaced apart from the membrane 110 at the helical fluid channel 170. In an embodiment, there is no cage or other such separate member located between the interior surface 160 and the membrane 110.

The core 125 may be a member that is surrounded by the membrane such that the membrane is disposed between the core 125 and the housing 105. In an embodiment, core 125 is tubular or cylindrical in shape. The core 125 can have a series of openings allowing fluid to pass between the membrane and a hollow center of the core 125. In embodiments, the core can be any suitable material including, as non-limiting examples, polypropylene, polyethylene, and perfluoroalkoxy alkanes (PFAs).

The first end cap 115 is connected to one or more of the first end surface 150 of the housing 105, the first edge of the membrane, and core 125, if present. Similarly, the second end cap 120 can be attached to one or more of the second end surface of the housing, the second edge of the membrane, and core 125, if present. The first and second end cap can be any suitable material, including, as non-limiting examples, polypropylene, polyethylene, and perfluoroalkoxy alkanes (PFAs). In an embodiment, one or both of the first end cap 115 and the second end cap 120 can be the same material as the housing. The first and second end caps 115, 120 can be attached to housing 105 and optionally other parts using conventional means to create a fluid tight seal and create an integral filter. Non-limiting examples of such attachment include welds such as heat or ultrasonic welds, mechanical attachment including seals provided at joints, or the like.

In some embodiments, the first end cap 115 can have an inlet 135a for allowing fluid to enter the filter and an outlet 135b to allow filtered fluid to exit the filter. In some embodiments the inlet 135a is fluidly connected to the start of the fluid channel 170 that is formed in the interior surface 160 of the housing 105 such that the fluid flows along fluid channel 170 and passes through the membrane 110 as it flows towards outlet 135b. Once the fluid passes through the membrane 110 it can flow out of housing 105 through the outlet 135b. In an embodiment, outlet 135b can be positioned in the center of the first end cap. In embodiments including a core 125, the outlet 135b can be fluidly connected to a hollow interior space of the core 125. In some embodiments the first end cap may also have a vent 135c that allows gas to be vented out of the filter 100.

When the filter 100 is assembled, the membrane can contact the raised area 175 of the interior surface of the housing 105. In some embodiments, the housing provides support through the raised area 175, for example to aid the membrane 110 in maintaining its shape when there is a pressure differential that could cause the membrane 110 to push outward against the housing 105. In an embodiment, the percentage of the interior surface of the housing contacting the membrane to provide support is balanced with the shape and dimensions of the fluid channel to ensure there is adequate flow in the filter 100. Thus, in some embodiments, the raised area 175 forms less than or equal to about 30%, 25%, 20%, 15%, or 10% of the interior surface 160 of the housing 105. In an embodiment, the raised area 175 forms a percentage of the surface area of interior surface 160 that is in a range from about 5% to about 30%, about 5% to about 25%, about 5% to about 20%, about 5% to about 15%, about 10% to about 30%, about 10 % to about 25%, about 10% to about 20%, about 15% to about 30%, about 15% to about 25%, about 20% to about 30% of the surface area of interior surface 160, or any range and subrange therebetween.

In some embodiments, in order to ensure adequate flow and support for the membrane, a helical pitch HP of the fluid channel is less than or equal to about 60 mm, 55 mm, 50 mm, 45 mm, 40 mm, 35 mm, 30 mm, 25 mm, 20 mm, 15 mm, or 10 mm, or is in a range from about 5 mm to about 60 mm, about 5 mm to about 55 mm, about 5 mm to about 50 mm, about 5 mm to about 45 mm, about 5 mm to about 40 mm, about 5 mm to about 35 mm, about 5 mm to about 30 mm, about 5 mm to about 25 mm, about 5 mm to about 20 mm, about 10 to about 60 mm, about 10 to about 55 mm, about 10 mm to about 50 mm, about 10 mm to about 45 mm, about 10 mm to about 40 mm, about 10 mm to about 35 mm, about 10 mm to about 30 mm, about 10 mm to about 25 mm, about 10 mm to about 20 mm, about 15 mm to about 60 mm, about 15 mm to about 55 mm, about 15 mm to about 50 mm, about 15 mm to about 45 mm, about 15 mm to about 40 mm, about 15 mm to about 35 mm, about 15 mm to about 30 mm, about 15 mm to about 25 mm, about 15 mm to about 20 mm, about 20 mm to about 60 mm, about 20 mm to about 55 mm, about 20 mm to about 50 mm, about 20 mm to about 45 mm, about 20 mm to about 40 mm, about 20 mm to about 35 mm, about 20 mm to about 30 mm, about 25 mm to about 60 mm, about 25 mm to about 55 mm, about 25 mm to about 50 mm, about 25 mm to about 45 mm, about 25 mm to about 40 mm, about 25 mm to about 35 mm, about 25 mm to about 30 mm, about 30 mm to about 60 mm, about 30 mm to about 55 mm, about 30 mm to about 50 mm, about 30 mm to about 45 mm, about 30 mm to about 40 mm, about 30 mm to about 35 mm, about 40 mm to about 60 mm, about 45 mm to about 55 mm, about 40 mm to about 50 mm, about 40 mm to about 45 mm, about 45 mm to about 60 mm, about 45 mm to about 55 mm, about 45 mm to about 50 mm and all ranges and subranges therebetween. As used herein the helical pitch HP is the axial distance of one complete helix turn, as shown, for example, in Fig. 4.

In some embodiments, in order to ensure adequate flow and support for the membrane, a helical angle of the fluid channel HA is less than or equal to 45 degrees, 40 degrees, 35 degrees, 30 degrees, 25 degrees, 20 degrees, 15 degrees or 10 degrees, or is in a range from about 5 degrees to about 45 degrees, about 5 degrees to about 40 degrees, about 5 degrees to about 35 degrees, about 5 degrees to about 30 degrees, about 5 degrees to about 25 degrees, about 5 degrees to about 20 degrees, about 5 degrees to about 15 degrees, about 5 degrees to about 10 degrees, about 10 degrees to about 45 degrees, about 10 degrees to about 40 degrees, about 10 degrees to about 35 degrees, about 10 degrees to about 30 degrees, about 10 degrees to about 25 degrees, about 10 degrees to about 20 degrees, about 10 degrees to about 15 degrees, about 15 degrees to about 45 degrees, about 15 degrees to about 40 degrees, about 15 degrees to about 35 degrees, about 15 degrees to about 30 degrees, about 15 degrees to about 25 degrees, about 15 degrees to about 20 degrees, about 20 degrees to about 45 degrees, about 20 degrees to about 40 degrees, about 20 degrees to about 35 degrees, about 20 degrees to about 30 degrees, about 20 degrees to about 25 degrees and all ranges and subranges therebetween. As used herein, helical angle HA is the angle of the helix with respect to a plane perpendicular to the axis of the housing 105 as shown in Fig. 4. If the helical angle is too large, then the shape of the raised area will not provide adequate support because pleats of the membrane 110 are more likely to be pushed into the fluid channel 170 when pressure forces the membrane 110 against the housing 105.

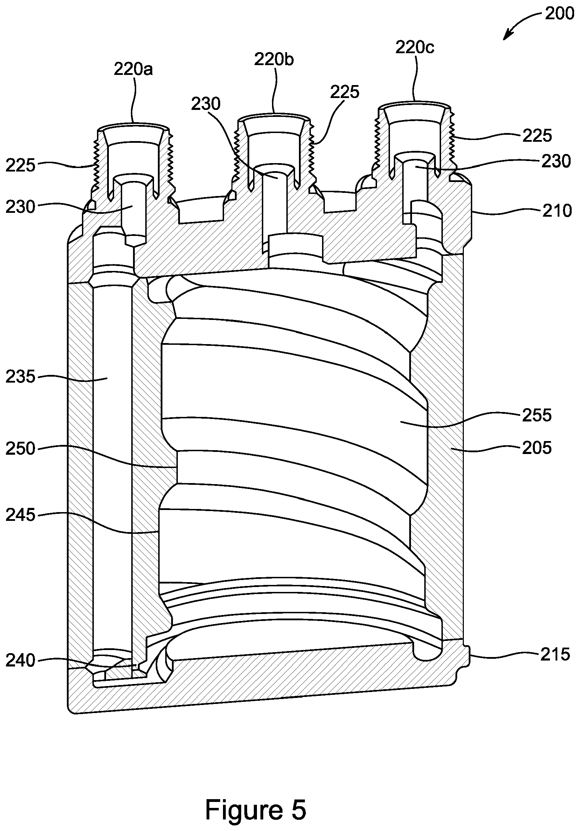

Fig. 5 is a cross-sectional view of an exemplary filter according to another embodiment. Filter 200 includes housing 205, first end cap 210, and second end cap 215. First end cap 210 can include connectors 220a,b,c. In the embodiment shown in Fig. 5, the connectors 220a,b,c includes inlet 220a, outlet 220b, and vent 220c. Each of connectors 220a,b,c can include threading 225 and aperture 230. Filter 200 can further include a tube 235. Tube 235 can convey fluid received at inlet 220a to a port 240, through which the fluid can then pass into the fluid channel 245 defined between raised portions 250 of the interior surface 255. The fluid channel 245, raised portions 250, and interior surface 255 can be according to any description herein corresponding to the respective fluid channels, raised portions and interior surfaces, such as fluid channel 170 formed by raised portions 175 of interior surface 155, as described above and shown in Figs. 3 and 4. Port 240 can be located at any point below a top of the fluid channel 245, such as the end of housing 205 where it meets first end cap 210. In an embodiment, port 240 provides the fluid from inlet 220a to fluid channel 245 at a bottom of housing 205, for example where the housing 205 meets second end cap 215. In such an embodiment, fluid provided to filter 200 at inlet 220a passes downwards through the tube 235 to port 240, where it is introduced into helical fluid channel 245. A membrane (not shown) can contact the raised portions 250 defining the fluid channel 245. The fluid can pass through the membrane to a center of the membrane which can optionally include a core, as described herein. The fluid that has passed through the membrane can exit the filter 200 by way of outlet 220b, which is in fluid communication with the core of or a space within the membrane on an opposite side of the membrane from fluid channel 245. Vent 220c can provide venting from the fluid channel 245, for example at the top of fluid channel 245 where housing 205 meets first end cap 210.

## Claims

1. A filter comprising:
a housing (105) having interior and exterior surfaces,
a membrane (110) disposed within the housing,
a core (125) disposed within the housing wherein the membrane is positioned between the core and the housing, wherein the core has a series of openings allowing fluid to pass between the membrane and a hollow centre of the core, and
a fluid channel (170) formed in the interior surface of the housing in a helical pattern with a helical pitch in an axial direction of the housing of less than or equal to about 60 mm, the fluid channel being formed between raised portions of the interior surface of the housing.

2. The filter of claim 1, wherein the helical pattern has a helical angle of less than or equal to about 45 degrees.

3. The filter of claim 1 or 2 comprising a first end cap, wherein the first end cap (115) comprises a first opening acting as an inlet for fluid and a second opening acting as an outlet for the fluid.

4. The filter of claim 3, wherein the first end cap further comprises a third opening acting as a vent (135c).

5. The filter of claim 3 or 4, wherein the inlet for the fluid directs the fluid into the fluid channel.

6. The filter of any of claims 3 to 5, wherein the filter includes a tube (235) configured to receive the fluid from the inlet and a port configured to provide fluid to the fluid channel, and the tube and the port are configured such that the fluid is introduced into the fluid channel at a bottom of the fluid channel.

7. The filter of claim 6, wherein the exterior surface of the housing has a generally cylindrical shape, and the tube is disposed in a projection extending outwards from the generally cylindrical outer surface of the housing.

8. The filter of any of claims 3 to 7, wherein the outlet is configured to allow the fluid within the fluid channel to leave the filter.

9. The filter of any of claims 3 to 8, wherein each of the inlet and the outlet have a different height.

10. The filter of any preceding claim, wherein the membrane is in direct contact with the raised portions of the interior surface.

11. The filter of any preceding claim, wherein there is no cage located between the membrane and the raised portions of the interior surface.

12. The filter of any of claims 3 to 11 wherein the housing includes a first end configured to be connected to the first end cap and a second end configured to be connected to the second end cap, wherein the first end cap includes a first opening acting as an inlet for fluid and a second opening acting as an outlet for the fluid.

13. A method of filtering a fluid through a filter according to any of claims 1-12, the method comprising:
introducing the fluid into a filter through an inlet;
directing the fluid through a fluid channel formed in a housing of the filter, the fluid channel having a helical pattern with a helical pitch in an axial direction of the housing of less than or equal to about 60 mm, the fluid channel formed between raised portions of an interior surface of the housing; and
passing the fluid through a membrane, wherein the membrane is in direct contact with the raised portions.

14. The method of claim 13, wherein said directing the fluid through the fluid channel is performed prior to said passing the fluid through the membrane.

## Patentansprüche

1. Filter, umfassend:
ein Gehäuse (105) mit Innen- und Außenflächen,
eine Membran (110), die innerhalb des Gehäuses angeordnet ist,
einen Kern (125), der innerhalb des Gehäuses angeordnet ist, wobei die Membran zwischen dem Kern und dem Gehäuse positioniert ist, wobei der Kern eine Reihe von Öffnungen aufweist, die erlauben, dass Fluid zwischen der Membran und einem hohlen Zentrum des Kerns geleitet wird, und
einen Fluidkanal (170), der in der Innenfläche des Gehäuses in einem helikalen Muster mit einer helikalen Steigung in einer axialen Richtung des Gehäuses von weniger als oder gleich etwa 60 mm gebildet ist, wobei der Fluidkanal zwischen erhabenen Abschnitten der Innenfläche des Gehäuses gebildet ist.

2. Filter nach Anspruch 1, wobei das helikale Muster einen helikalen Winkel von weniger als oder gleich etwa 45 Grad aufweist.

3. Filter nach Anspruch 1 oder 2, umfassend eine erste Endkappe, wobei die erste Endkappe (115) eine erste Öffnung, die als ein Einlass für Fluid wirkt, und eine zweite Öffnung, die als ein Auslass für das Fluid wirkt, umfasst.

4. Filter nach Anspruch 3, wobei die erste Endkappe ferner eine dritte Öffnung umfasst, die als eine Entlüftung (135c) wirkt.

5. Filter nach Anspruch 3 oder 4, wobei der Einlass für das Fluid das Fluid in den Fluidkanal lenkt.

6. Filter nach einem der Ansprüche 3 bis 5, wobei der Filter ein Rohr (235), das dazu konfiguriert ist, das Fluid von dem Einlass aufzunehmen, und einen Anschluss, der dazu konfiguriert ist, Fluid zu dem Fluidkanal bereitzustellen, beinhaltet, und das Rohr und der Anschluss konfiguriert sind, sodass das Fluid in den Fluidkanal an einem Boden des Fluidkanals eingebracht wird.

7. Filter nach Anspruch 6, wobei die Außenfläche des Gehäuses eine im Allgemeinen zylindrische Form aufweist und das Rohr in einem Vorsprung angeordnet ist, der sich von der im Allgemeinen zylindrischen Außenfläche des Gehäuses nach außen erstreckt.

8. Filter nach einem der Ansprüche 3 bis 7, wobei der Auslass dazu konfiguriert ist, zu erlauben, dass das Fluid innerhalb des Fluidkanals den Filter verlässt.

9. Filter nach einem der Ansprüche 3 bis 8, wobei jeder von dem Einlass und dem Auslass eine unterschiedliche Höhe aufweist.

10. Filter nach einem vorhergehenden Anspruch, wobei die Membran in direktem Kontakt mit den erhabenen Abschnitten der Innenfläche ist.

11. Filter nach einem vorhergehenden Anspruch, wobei sich kein Käfig zwischen der Membran und den erhabenen Abschnitten der Innenfläche befindet.

12. Filter nach einem der Ansprüche 3 bis 11,
wobei das Gehäuse ein erstes Ende, das dazu konfiguriert ist, mit der ersten Endkappe verbunden zu sein, und ein zweites Ende, das dazu konfiguriert ist, mit der zweiten Endkappe verbunden zu sein, beinhaltet, wobei die erste Endkappe eine erste Öffnung, die als ein Einlass für Fluid wirkt, und eine zweite Öffnung, die als ein Auslass für das Fluid wirkt, beinhaltet.

13. Verfahren zum Filtern eines Fluids durch einen Filter gemäß einem der Ansprüche 1-12, wobei das Verfahren Folgendes umfasst:
Einbringen des Fluids in einen Filter durch einen Einlass;
Lenken des Fluids durch einen Fluidkanal, der in einem Gehäuse des Filters gebildet ist, wobei der Fluidkanal ein helikales Muster mit einer helikalen Steigung in einer axialen Richtung des Gehäuses von weniger als oder gleich etwa 60 mm aufweist, wobei der Fluidkanal zwischen erhabenen Abschnitten einer Innenfläche des Gehäuses gebildet ist; und
Leiten des Fluids durch eine Membran, wobei die Membran in direktem Kontakt mit den erhabenen Abschnitten ist.

14. Verfahren nach Anspruch 13, wobei das Lenken des Fluids durch den Fluidkanal vor dem Leiten des Fluids durch die Membran durchgeführt wird.

## Revendications

1. Filtre comprenant :
un boîtier (105) comportant des surfaces intérieures et extérieures,
une membrane (110) disposée à l'intérieur du boîtier,
un noyau (125) disposé à l'intérieur du boîtier, ladite membrane étant positionnée entre le noyau et le boîtier, ledit noyau possédant une série d'ouvertures permettant au fluide de passer entre la membrane et un centre creux du noyau, et un canal de fluide (170) formé dans la surface intérieure du boîtier dans un motif hélicoïdal avec un pas hélicoïdal dans une direction axiale du boîtier inférieur ou égal à environ 60 mm, le canal de fluide étant formé entre des parties surélevées de la surface intérieure du boîtier.

2. Filtre de la revendication 1, ledit motif hélicoïdal possédant un angle d'hélice inférieur ou égal à environ 45 degrés.

3. Filtre de la revendication 1 ou 2, comprenant un premier capuchon d'extrémité, ledit premier capuchon d'extrémité (115) comprenant une première ouverture servant d'entrée pour le fluide et une deuxième ouverture servant de sortie pour le fluide.

4. Filtre de la revendication 3, ledit premier capuchon d'extrémité comprenant en outre une troisième ouverture servant d'évent (135c).

5. Filtre de la revendication 3 ou 4, ladite entrée pour le fluide dirigeant le fluide dans le canal de fluide.

6. Filtre de l'une quelconque des revendications 3 à 5, ledit filtre comprenant un tube (235) conçu pour recevoir le fluide en provenance de l'entrée et un orifice conçu pour fournir du fluide au canal de fluide, et ledit tube et ledit orifice étant conçus de sorte que le fluide soit introduit dans le canal de fluide au niveau d'un fond du canal de fluide.

7. Filtre de la revendication 6, ladite surface extérieure du boîtier possédant une forme globalement cylindrique, et ledit tube étant disposé dans une saillie s'étendant vers l'extérieur à partir de la surface extérieure globalement cylindrique du boîtier.

8. Filtre de l'une quelconque des revendications 3 à 7, ladite sortie étant conçue pour permettre au fluide à l'intérieur du canal de fluide de quitter le filtre.

9. Filtre de l'une quelconque des revendications 3 à 8, chacune de l'entrée et de la sortie possédant une hauteur différente.

10. Filtre d'une quelconque revendication précédente, ladite membrane étant en contact direct avec les parties surélevées de la surface intérieure.

11. Filtre d'une quelconque revendication précédente, aucune cage n'est située entre la membrane et les parties surélevées de la surface intérieure.

12. Filtre de l'une quelconque des revendications 3 à 11, ledit boîtier comprenant une première extrémité conçue pour être raccordée au premier capuchon d'extrémité et une seconde extrémité conçue pour être raccordée au second capuchon d'extrémité, ledit premier capuchon d'extrémité comprenant une première ouverture servant d'entrée pour le fluide et une deuxième ouverture servant de sortie pour le fluide.

13. Procédé de filtration d'un fluide à travers un filtre selon l'une quelconque des revendications 1-12, le procédé comprenant :
l'introduction du fluide dans un filtre par une entrée ;
le guidage du fluide à travers un canal de fluide formé dans un boîtier du filtre, le canal de fluide possédant un motif hélicoïdal avec un pas d'hélice dans une direction axiale du boîtier inférieur ou égal à environ 60 mm, le canal de fluide étant formé entre des parties surélevées d'une surface intérieure du boîtier ; et
le passage du fluide à travers une membrane, ladite membrane étant en contact direct avec les parties surélevées.

14. Procédé de la revendication 13, ledit guidage du fluide à travers le canal de fluide étant effectué avant ledit passage du fluide à travers la membrane.
